# FASCICULE DE BREVET EUROPEEN

(11) **EP 3 293 147 B1**
(45) Date de publication et mention de la délivrance du brevet: **10.04.2019**
(21) Numéro de dépôt: 17190222.4
(22) Date de dépôt: 08.09.2017
(51) Int. Cl.: C01B 33/20, C01B 33/32, H01M 4/50, H01M 4/52, H01M 4/58

(54) **MATÉRIAU SILICATÉ DE STRUCTURE OLIVINE**
SILIKATMATERIAL MIT OLIVINSTRUKTUR
SILICATE MATERIAL WITH OLIVINE STRUCTURE

(30) Priorité: 12.09.2016 FR 1658466
(43) Date de publication de la demande: 14.03.2018
(73) Titulaire: Commissariat à l'Energie Atomique et aux Energies Alternatives, 75015 Paris (FR)
(72) Inventeur: LEFEVRE, Guillaume, 38000 GRENOBLE (FR); DUCROS, Jean-Baptiste, 38360 SASSENAGE (FR); MARTINET, Sébastien, 38210 ST QUENTIN SUR ISERE (FR)
(74) Mandataire: Nony

(56) Documents cités:
- EP-A1- 1 134 826
- US-A1- 2014 227 596
- A. SARCIBAR ET AL.: "New insights into electrochemical performance of Li2MnSiO4: effect on cationic substitutions", J. MATER CHEM., vol. 3, 2 février 2015 (2015-02-02), pages 6004-6011, XP002770398,
- R.J. GUMMOW ET AL.: "Synthesis, structure and electrochemical performance of magnesium substitutes lithimanganese orthosilicate cathode materials for litium ion batteries", JOURNAL OF POWER SOURCES, vol. 197, 12 septembre 2011 (2011-09-12), pages 231-237, XP002770399,

## Description

La présente invention concerne un produit silicaté et de structure cristallographique olivine, destiné notamment à une batterie, ainsi que des procédés de fabrication d'un tel produit.

Les matériaux polyanioniques cristallins sont des matériaux d'intérêt pour l'industrie des batteries, en particulier des batteries lithium-ion. Toutefois, à ce jour, à la connaissance des inventeurs, seul le phosphate de fer lithié LiFePO₄ est commercialisé. A la différence d'autres matériaux pour électrode positive de batterie tels que les oxydes lamellaires et les spinelles, les matériaux polyanioniques présentent une structure stabilisée par la covalence du groupement anionique. Ils favorisent ainsi un fonctionnement fiable d'une batterie qui les comporte, limitant les risques d'emballement de la batterie par dégagement d'oxygène dans l'électrolyte. De tels matériaux sont par exemple décrits dans US 6,085,015, US 6,514,640 B1 et EP 1 134 826 A1.

Les phosphate, borate, sulfate, silicate ainsi que leur déclinaison pyro- et fluoro-sont des polyanions de base pour constituer de tels matériaux polyanioniques. Notamment, les matériaux polyanioniques à base de silicate, dits silicatés, apparaissent comme les plus intéressants dès lors que la sécurité de fonctionnement et la fiabilité de la batterie doivent être assurées.

Il est par exemple connu un matériau silicaté de formule Li₂MSiO₄, avec M étant un métal de transition choisi parmi le fer (Fe), le manganèse (Mn), le cobalt (Co) et le nickel (Ni). Un tel matériau silicaté est décrit par exemple dans US 2012/0227252 A1. La structure cristallographique de ces matériaux silicatés consiste en un empilement de tétraèdres de LiO₄, MO₄ et SiO₄. Ces silicates présentent une forte capacité spécifique théorique comprise entre 325 mAh/g et 333 mAh/g, environ deux fois supérieure aux oxydes mixtes tels que LiCoO₂, LiNi_{0.8}Co_{0.15}Al_{0.05}O₂ (NCA), LiNi_{1/3}Co_{1/3}Mn_{1/3}O₂ (NMC), LiMnO₄ (LMO) et le phosphate de fer lithié LiFePO₄.

Le document A. Sarcibar et al., « New insights into electrochemical performance of Li2MnSiO4 : effect on cation substitutions », J. Mater. Chem, vol. 3, 2 février 2015, pages 6004-6011, décrit un matériau de formule Li_{0,5}Mn_{0,75}Mg_{0,25}SiO₄.

US 2014/227596 A1 décrit des matériaux de formules respectives Li_{1,875}Mg_{0,0625}MnSiO₄, Li_{1,96}Mg_{0,02}MnSiO₄, Li_{1,8125}Mg_{0,09375}FeSiO₄ et Li_{1,875}Mg_{0,0625}CoSiO₄.

Pour une utilisation à titre de cathode de batterie lithium-ion, le silicate Li₂MnSiO₄ est le plus adapté car il présente des potentiel d'insertion du lithium pour les couples Mn²⁺/Mn³⁺ et Mn³⁺/Mn⁴⁺ (respectivement de 4,1 V et 4,5V) tous deux plus faibles que le potentiel à partir duquel une dégradation des électrolytes organiques pour batterie lithium-ion est observé (4,6 V).

Cependant, lorsqu'il forme une cathode de batterie lithium-ion, le silicate Li₂MnSiO₄ s'amorphise brusquement dès la première charge, ce qui se traduit par une perte progressive des performances au cours de cycles de charge/décharge de la batterie.

Il existe donc un besoin pour un matériau cristallin, silicaté, comportant un métal alcalin, notamment du lithium, et qui, lorsqu'il forme une cathode de batterie, notamment une cathode de batterie lithium-ion, conserve sa structure cristallographique au cours de cycles charge/décharge de la batterie.

Ce besoin est satisfait au moyen d'un produit constitué en tout ou partie par un matériau de structure cristallographique olivine et de formule (I):

AₐZ_{z}MₘSiO₄

dans laquelle :
- A est choisi parmi le lithium (Li), le sodium (Na), le potassium (K) et leurs mélanges,
- Z est choisi parmi le béryllium (Be), le magnésium (Mg), le calcium (Ca), le strontium (Sr), le baryum (Ba) et leurs mélanges,
- M est choisi parmi le fer (Fe), le nickel (Ni), le cobalt (Co), le manganèse (Mn), le chrome (Cr) et leurs mélanges,
- a, z et m sont les coefficients stoechiométriques respectivement de A, Z et M, et remplissent les conditions suivantes :
   ∘ z > 0, m > 0, a > 0,
   ∘ a + z + m ≤ 2, et
   ∘ 2 ≤ (4 - a - 2z) /m < 4.

La structure cristallographique olivine du matériau de formule (I) favorise l'insertion et l'extraction de l'élément A. Le matériau selon l'invention est ainsi parfaitement adapté à former une cathode de batterie. L'élément A est en effet extrait de la cathode au cours de la charge et inséré dans la cathode au cours de la décharge de la batterie.

Bien que les propriétés du matériau de formule (I) aient déjà été prédites théoriquement, selon les inventeurs, la fabrication et l'obtention du matériau de formule (I) n'ont, jusqu'à présent, jamais été rapportées dans la littérature scientifique et technique.

Par exemple, l'article « Is it possible to prepare olivine-type LiFeSiO4 ? A joint computational an experimental investigation », M.E. Arroyo y de Dompablo et al., Solid State Ionics, 179 (2008), 1758-1762, décrit des tentatives pour obtenir un silicate LiFeSiO₄ de structure olivine ayant échouées.

Il est ainsi proposé, selon un des aspects de l'invention, un procédé de fabrication, dénommé par la suite « premier procédé », comprenant au moins les étapes successives consistant à :
a) disposer d'un premier matériau comportant au moins un métal alcalin A choisi parmi le lithium (Li), le sodium (Na), le potassium (K) et leurs mélanges, et
   d'un deuxième matériau de structure cristallographique olivine de formule (III):

   Z_{z'}MₘSiO₄,

   dans laquelle :
   - Z est choisi parmi le béryllium (Be), le magnésium (Mg), le calcium (Ca), le strontium (Sr), le baryum (Ba), et leurs mélanges,
   - M est choisi parmi le fer (Fe), le nickel (Ni), le cobalt (Co), le manganèse (Mn), le chrome (Cr) et leurs mélanges,
   - z' > z, z étant tel que défini précédemment, et
   - m est tel que défini précédemment,
b) maintenir un bain liquide comportant, de préférence constitué par, le premier matériau en fusion et le deuxième matériau à l'état solide, à une température de maintien et pendant une durée de maintien en température propices à l'insertion d'un métal alcalin A choisi parmi le lithium (Li), le sodium (Na), le potassium (K) et leurs mélanges, et fourni par le premier matériau dans des sites libres de la structure cristallographique olivine du deuxième matériau de sorte à former un produit selon l'invention,
c) optionnellement, refroidissement du bain liquide, et
d) optionnellement, lavage puis séchage.

Selon un autre de ses aspects, l'invention concerne un procédé de fabrication d'un matériau de structure cristallographique olivine de formule (I) :

AₐZ_{z}MₘSiO₄

dans laquelle :
- A est choisi parmi le lithium (Li), le sodium (Na), le potassium (K), et leurs mélanges,
- Z est choisi parmi le béryllium (Be), le magnésium (Mg), le calcium (Ca), le strontium (Sr), le baryum (Ba) et leurs mélanges,
- M est choisi parmi le fer (Fe), le nickel (Ni), le cobalt (Co), le manganèse (Mn), le chrome (Cr) et leurs mélanges,
- a, z et m sont les coefficients stoechiométriques respectivement de A, Z et M, et qui remplissent les conditions suivantes :
   ∘ z > 0, m > 0, a > 0,
   ∘ a + z + m ≤ 2, et
   ∘ 2 ≤ (4 - a - 2z) /m < 4
ledit procédé comprenant au moins les étapes consistant à :
**i.** disposer d'un matériau de structure cristallographique olivine et de formule (II) :

   Z_{z}MₘSiO₄,

   obtenu par oxydation d'un matériau de structure cristallographique olivine de formule (III) :

   Z_{z'}MₘSiO₄,

   dans lesquelles Z, M, z et m sont tels que définis ci-dessus et l'indice stoechiométrique z' est tel que z' > z, et
**ii.** réduire électrochimiquement ledit matériau de formule (II) en présence d'une électrode source en élément A dans des conditions propices à la formation du matériau de formule (I).

Ledit procédé sera par la suite dénommé « deuxième procédé ». De préférence, le matériau de formule (I) obtenu par le deuxième procédé est constitutif du produit selon l'invention.

L'invention concerne aussi un produit obtenu par le premier procédé ainsi qu'un produit obtenu par le deuxième procédé.

Par ailleurs, elle concerne une cathode de batterie, notamment choisie parmi une cathode de batterie lithium-ion (Li-ion), une cathode de batterie sodium-ion (Na-ion), une cathode de batterie potassium-ion (K-ion), une cathode de batterie lithium (Li), une cathode de batterie sodium (Na) et une cathode de batterie potassium (K), ladite cathode de batterie comportant un produit selon l'invention, ou obtenu selon le premier procédé selon l'invention et/ou par le deuxième procédé selon l'invention.

Enfin, l'invention concerne une batterie, de préférence choisie parmi une batterie lithium-ion, une batterie sodium-ion, une batterie lithium et une batterie potassium, la batterie comportant une cathode de batterie selon l'invention.

D'autres avantages de l'invention apparaitront à la lecture de la description détaillée qui va suivre, et grâce au dessin annexé dans lequel :
- la figure 1 est un graphe représentant l'évolution du potentiel, en V *vs* Li⁺/Li, en fonction de la capacité spécifique nette, en mAh/g, d'une électrode positive d'une batterie comportant un exemple de réalisation du produit selon l'invention,
- la figure 2 est un graphe représentant l'évolution de la capacité spécifique, en mAh/g, de l'électrode positive de la batterie de la figure 1, en fonction du nombre de cycles de charge/décharge,
- la figure 3 est un diffractogramme par rayons X d'un composé de MgMnSiO₄/C préparé dans le cadre d'un exemple de mise en oeuvre du premier procédé selon l'invention,
- la figure 4 est une image du composé de MgMnSiO₄/C de la figure 3 prise en microscopie électronique à balayage,
- la figure 5 est un cliché de diffraction d'une particule formant le composé MgMnSiO₄/C de la figure 3 acquis au moyen d'un microscope électronique en transmission,
- la figure 6 est un graphe représentant l'évolution du potentiel, en V *vs* Li⁺/Li, en fonction de la capacité spécifique nette, en mAh/g, d'une électrode positive d'une batterie comportant un deuxième exemple de réalisation du produit selon l'invention, et
- la figure 7 est un graphe représentant l'évolution de la capacité spécifique, en mAh/g, de l'électrode positive de la batterie de la figure 6, en fonction du nombre de cycles de charge/décharge.

### PRODUIT

Le produit selon l'invention est constitué en tout ou partie par un matériau de structure olivine et de formule AₐZ_{z}MₘSiO₄.

En particulier, la somme des coefficients stoechiométriques a + z + m peut être supérieure à 1, voire supérieure à 1,5, voire supérieure à 1,9, de préférence supérieure à 1,95, voire de préférence supérieure à 1,99.

De préférence, la somme des coefficients stoechiométriques a + z + m est égale à 2. Chaque site octaédrique de la structure cristallographique du matériau est alors occupé par l'un des éléments A, Z et M.

En particulier, les coefficients stoechiométriques a, z et m peuvent être tels que z = 1 - a et/ou m = 1. De préférence, z = 1 - a et m = 1. La capacité spécifique du matériau constitutif du produit est alors optimale.

Le coefficient stoechiométrique a peut être supérieur à 0,1, voire supérieur à 0,5. De préférence, il est supérieur à 0,9 et/ou inférieur à 1, en particulier inférieur à 0,999.

De préférence, le coefficient stoechiométrique z est inférieur à 1, de préférence inférieur à 0,5, de préférence inférieur à 0,1, de préférence inférieur à 0,05, mieux inférieur à 0,01. Le nombre de sites de la structure olivine accessible à l'élément A est alors augmenté, ce qui favorise l'obtention d'une capacité spécifique du produit élevée.

Le matériau est notamment caractérisé par le fait que le coefficient stoechiométrique z est non nul. Comme cela apparaîtra par la suite, cette caractéristique est une signature des premier et deuxième procédés. Par exemple, dans un mode de réalisation, z est supérieur à 0,01, voire supérieur à 0,05, voire même supérieur à 0,1. La présence de l'élément Z, même à l'état de traces, dans le matériau peut aisément être constatée par une analyse ICP (pour « *Inductively Coupled Plasma* » en anglais).

Pour ce qui concerne le coefficient stoechiométrique m, il est de préférence compris entre 0,9 et 1,1. De préférence, il est égal à 1.

De préférence, Z est choisi parmi le magnésium (Mg), le calcium (Ca) et leurs mélanges. En particulier, Z est préférentiellement le magnésium.

De préférence, A comporte, en pourcentage molaire exprimé sur le nombre total de moles de métal alcalin constituant A, plus de 90 % de lithium et/ou de sodium.

De préférence, A est constitué à plus de 99 % de lithium, en pourcentage molaire exprimé sur le nombre total de moles de métal alcalin constituant A. De préférence, A est le lithium. Un matériau à base de lithium présente les propriétés optimales pour former une batterie lithium ion.

Un produit particulièrement préféré comporte, de préférence pour plus de 95%, de préférence pour plus de 99%, mieux pour sensiblement 100% de sa masse, un matériau de formule LiₐMg_{z}MnₘSiO₄. De préférence alors, a > 0,95, z < 0,05 et m est compris entre 0,98 et 1,02, de préférence est égal à 1.

Le produit selon l'invention peut se présenter sous des formes diverses. Par exemple, il peut se présenter sous la forme d'une poudre de particules secondaires, par exemple frittées, constituées par l'agglomération de particules primaires. Notamment, les particules primaires peuvent présenter une taille inférieure à 100 nm, de préférence de taille inférieure à 50 nm. La « taille » d'une particule primaire correspond au diamètre de ladite particule et peut être mesurée des images acquises en microscopie électronique à balayage. La conductivité électronique macroscopique du produit est alors améliorée. En outre, la surface spécifique de la particule est ainsi augmentée, facilitant l'échange avec le milieu électrolytique lorsque le produit est disposé dans une batterie. De préférence encore, les particules primaires sont recouvertes, de préférence intégralement, par une couche de carbone dont l'épaisseur est inférieure à 10 nm, pour améliorer encore la conductivité électronique du produit.

Le produit peut aussi se présenter sous la forme d'une électrode, en particulier une cathode de batterie. De préférence alors, le produit se présente sous la forme de particules faites du matériau de formule AₐZ_{z}MₘSiO₄ agglomérées entre elles par du carbone. Par exemple, le produit peut comporter, une proportion massique du matériau de formule AₐZ_{z}MₘSiO₄ supérieure à 50%, voire supérieure à 80%, très préférablement supérieure à 90%, le complément étant constitué par du carbone et un liant polymère. L'électrode peut en outre comporter un collecteur de courant en aluminium sur une des faces duquel le produit est disposé.

### PREMIER PROCEDE

Le produit selon l'invention peut être obtenu par le premier procédé qui est décrit ci-après.

A l'étape **a)** du premier procédé, le premier matériau comporte au moins un métal alcalin A choisi parmi le lithium (Li), le sodium (Na), le potassium (K) et leurs mélanges.

Pour fabriquer un produit selon l'invention comportant un matériau incluant du lithium, le premier matériau peut comporter un sel de lithium, de préférence choisi dans le groupe formé par LiNO₃, LiCl, LiBr, LiI, Li₂CO₃ et leurs mélanges. Par exemple, le premier matériau peut être un mélange de LiNO₃ et LiCl. En variante, le premier matériau peut en outre comporter un sel de sodium et/ou un sel de potassium, de préférence choisi dans le groupe formé par KCl, NaCl, NaBr, KBr, NaI, KI, NaNO₃, KNO₃, Na₂CO₃, K₂CO₃ et leurs mélanges. Par exemple, il peut être un mélange de LiCl et KCl.

Pour fabriquer un produit selon l'invention comportant un matériau incluant du sodium, le premier matériau peut être un sel de sodium, de préférence choisi dans le groupe formé par NaCl, NaBr, NaI, NaNO₃, Na₂CO₃ et leurs mélanges. Par exemple, le premier matériau peut être un mélange de NaNO₃ et NaCl. En variante, le premier matériau peut en outre comporter un sel de potassium, par exemple choisi parmi KCl, KBr, KI, KNO₃, K₂CO₃ et leurs mélanges.

Pour fabriquer un produit selon l'invention comportant un matériau incluant du potassium, le premier matériau peut comporter un sel de potassium, de préférence choisi dans le groupe formé par KBr, KCl, KI, KNO₃, K₂CO₃ et leurs mélanges. Par exemple, le premier matériau peut être un mélange de KNO₃ et KCl.

Bien évidemment, pour fabriquer un produit comportant plusieurs éléments parmi le lithium, le sodium et le potassium, un mélange de sels de lithium et/ou de sodium et/ou de potassium tels que listés ci-dessus peut être préparé.

De préférence, le premier matériau est constitué par un mélange de sels formant une composition eutectique. Le premier matériau présente alors une température de fusion modérée, facilitant ainsi la mise en oeuvre du premier procédé.

Le premier matériau peut se présenter sous la forme d'une poudre constituée de particules. L'obtention d'une masse liquide comportant le premier matériau en fusion est ainsi facilitée.

Par ailleurs, le premier procédé met en oeuvre un deuxième matériau de structure cristallographique olivine de formule (III) Z_{z'}MₘSiO₄, dans laquelle Z est choisi parmi le béryllium (Be), le magnésium (Mg), le calcium (Ca), le strontium (Sr), le baryum (Ba), et leurs mélanges et M est choisi parmi le fer (Fe), le nickel (Ni), le cobalt (Co), le manganèse (Mn), le chrome (Cr) et leurs mélanges.

Par ailleurs, le coefficient stoechiométrique z' est positif. De préférence, le coefficient z' est supérieur ou égal à 0,9 et/ou inférieur ou égal à 1.

En particulier, le coefficient stoechiométrique z' peut être égal à la somme des coefficients z et a du matériau selon l'invention.

Le coefficient m est positif. En outre, de préférence, il est compris entre 0,9 et 1,1. De préférence, il est égal à 1.

En particulier, le coefficient stoechiométrique m du deuxième matériau est déterminé de sorte à définir le coefficient stoechiométrique du matériau de formule AₐZ_{z}MₘSiO₄ constitutif du produit selon l'invention.

Le deuxième matériau peut se présenter sous différentes formes. Il peut se présenter sous la forme d'une poudre constituée de particules primaires dont la taille est de préférence inférieure à 100 nm, de préférence de taille inférieure à 50 nm. Les particules peuvent être agglomérées ou agrégées entre elles. De préférence, elles sont recouvertes, de préférence intégralement, par une couche de carbone d'une épaisseur inférieure à 10 nm.

Un bain liquide est formé, comportant, de préférence constitué par, le premier matériau en fusion et le deuxième matériau à l'état solide.

De préférence, le bain liquide est obtenu par fusion partielle d'une charge de départ constituée de particules formées du premier matériau et de particules formées du deuxième matériau, et de préférence intimement mélangées. En particulier, le mélange des premier et deuxième matériaux peut être réalisé au moyen d'un broyeur.

De préférence, la fusion partielle est opérée à une température supérieure à la température de fusion du premier matériau et inférieure à la température de dégradation du deuxième matériau.

Par « température de dégradation », on entend la température à partir de laquelle le matériau subit une dégradation chimique et/ou structurelle, par exemple du fait d'une démixtion, d'un changement de phase, ou d'une amorphisation.

De préférence, la température de fusion du premier matériau est inférieure à la température de dégradation du deuxième matériau, de préférence d'au moins 100°C, voire d'au moins 200°C.

Par exemple, lorsque le premier matériau est constitué par un mélange de LiNO₃ et LiCl, ou par un mélange de LiCl et KCl, et le deuxième matériau est MgMnSiO₄, la fusion partielle est opérée à une température comprise entre 200°C et 500°C.

De préférence, les étapes de mélange des premier et deuxième matériaux formant la charge de départ est réalisée conjointement à l'étape de chauffage de la charge de départ pour former le bain liquide.

Dans une variante, afin de former le bain liquide, on peut chauffer le premier matériau dans un creuset jusqu'à l'obtention d'une masse liquide en fusion. Le deuxième matériau peut alors être mélangé avec la masse liquide pour former le bain liquide. Par exemple, le deuxième matériau peut être versé dans le moule contenant la masse liquide. Alternativement, la masse liquide peut être versée dans un moule contenant le deuxième matériau.

A l'étape **b),** le bain liquide est alors maintenu à une température de maintien et pendant une durée de maintien en température propices à la formation d'un matériau de structure cristallographique olivine de formule AₐZ_{z}MₘSiO₄ selon l'invention.

La fusion de la charge de départ et/ou le maintien en température du bain liquide peut être réalisée au moyen de tout type de four. Par exemple, un four à moufle ou un four tubulaire comportant un moule en quartz, porcelaine, alumine, zircone ou platine peut être utilisé.

De préférence, la température de maintien est supérieure à la température de fusion du premier matériau et inférieure à la température de dégradation du deuxième matériau. De préférence, elle est supérieure d'au moins 10°C à la température de fusion du premier matériau et/ou inférieure d'au moins 10°C à la température de dégradation du deuxième matériau.

La durée de maintien en température est de préférence comprise entre cinq minutes et cinq jours.

Par exemple, lorsque le premier matériau est constitué par un mélange de LiNO₃ et LiCl, ou par un mélange de LiCl et KCl, et le deuxième matériau est MgMnSiO₄, la température de maintien est comprise entre 200°C et 500°C, et la durée de maintien en température est comprise entre 2 heures et 2 jours.

A l'étape **c),** le bain liquide est refroidi jusqu'à ce qu'il forme un bain solidifié, de préférence jusqu'à une température inférieure à 40°C. Le bain solidifié comporte alors le produit selon l'invention ainsi que des composés reliquats du processus de diffusion de l'étape b).

Le bain solidifié peut être lavé, à l'étape **d),** de sorte à séparer le produit selon l'invention des composés reliquats. Le lavage peut notamment être effectué avec de l'eau ou de l'éthanol. Le produit selon l'invention lavé peut ensuite être séché, par exemple sous vide, à une température supérieure à 60°C et/ou pendant une durée d'au moins 12 heures.

### DEUXIEME PROCEDE

Alternativement au premier procédé décrit précédemment, un deuxième procédé peut être mis en oeuvre pour fabriquer le produit selon l'invention.

A l'étape **i),** on dispose d'un matériau de structure cristallographique olivine et de formule (II) Z_{z}MₘSiO₄ obtenu par oxydation d'un matériau de structure cristallographique olivine de formule (III) Z_{z'}MₘSiO₄.

Le matériau de formule (III) du deuxième procédé selon l'invention est notamment identique au deuxième matériau du premier procédé selon l'invention.

En particulier, le coefficient stoechiométrique z' est supérieur à z. De préférence, z' est inférieur ou égal à 1.

Pour ce qui concerne le matériau de formule (II), de préférence, z est inférieur à 1, de préférence inférieur à 0,5, de préférence inférieur à 0,1, voire de préférence inférieur à 0,05.

Selon un premier mode de réalisation, le matériau de formule (II) Z_{z}MₘSiO₄ peut être, préalablement à sa réduction en étape **ii),** généré par oxydation électrochimique de l'élément M constitutif du matériau de formule (III). Par réaction (et notamment oxydation et réduction) « électrochimique », on considère une réaction d'oxydo-réduction mettant en jeu un transfert électronique, et réalisée au moyen d'une cellule électrochimique dotée classiquement d'une électrode de travail, d'une contre-électrode, d'un milieu électrolytique, et optionnellement d'un séparateur.

De préférence, l'oxydation électrochimique est réalisée au moyen d'un milieu électrolytique comprenant une source en élément A.

En particulier, le milieu électrolytique mis en oeuvre pour l'étape de réduction électrochimique peut être identique au milieu électrolytique mis en oeuvre pour l'étape d'oxydation électrochimique.

Par exemple, l'élément A est le lithium et le milieu électrolytique comprend une source du lithium, en particulier sous la forme d'un composé choisi parmi l'hexafluorophosphate de lithium (LiPF₆), le perchlorate de lithium (LiClO₄), l'arsenate de lithium (LiAsO₄), le tétrafluoroboate de lithium (LiBF₄), le bis-trifluoromethanesulfonimide de lithium (LiTFSI), le bis(oxalato)borate de lithium (LiBOB), le bis(fluorosulfonyl)imide de lithium (LiFSI), l'hexafluoroarsenate de lithium (LiAsF₆), le triflate de lithium (LiSO₃CF₃), le trifluoroacetate de lithium (LiCF₃CO₂), l'hexafluoroantimonate de lithium (LiSbF₆), LiN(CF₃SO₂)₃, LiN(C₂F₅SO₂), et leurs mélanges.

Par ailleurs, l'électrolyte peut comporter, par exemple à titre de solvant, un carbonate, choisi par exemple parmi l'éthyl- carbonate, le diéthyl- carbonate, l'éthyl-méthyl- carbonate, le diméthyl- carbonate, le carbonate de propylène et leurs mélanges. De préférence, la source en élément A, par exemple en lithium, est dissoute dans le carbonate.

De préférence, le matériau de formule (III) est oxydé en tant qu'électrode de travail face à une contre-électrode. Ainsi, l'extraction des ions Z²⁺ du matériau de formule (III) est optimale. Dans tous les cas, pour que l'extraction des ions Z²⁺ du matériau de formule (III) puisse s'opérer, le potentiel redox de la contre-électrode doit être inférieur au potentiel redox du couple M²⁺/M³⁺ de l'élément M du matériau de formule (III).

Le matériau de formule (II) Z_{z}MₘSiO₄ est de structure cristallographique olivine. Toutefois, il est caractérisé par le fait que la structure cristallographique olivine présente des sites inoccupés, notamment par l'élément Z. Une caractéristique du deuxième procédé réside, au cours de l'étape ii) de réduction électrochimique, en l'insertion dans les sites inoccupés d'un ou plusieurs métaux alcalins A, de sorte à obtenir le produit selon l'invention de formule (I) AₐZ_{z}MₘSiO₄.

L'électrode peut se présenter sous la forme de particules du matériau de formule (III) constitué de particules primaires, de préférence d'une taille inférieure à 100 nm, de préférence de taille inférieure à 50 nm, et de préférence recouvertes, de préférence intégralement par une couche de carbone, d'une épaisseur de préférence inférieure à 10 nm. Les particules peuvent notamment être liées entre elles par une matrice carbonée, pour améliorer la conduction électrique au sein de l'électrode et un par un liant polymère pour assurer la cohésion et la tenue mécanique de l'électrode.

Par exemple, la contre électrode est en un matériau comportant l'élément A. De préférence, pour fabriquer un matériau de formule (I) avec A étant Li et/ou Na et/ou K, la contre électrode est en un matériau en Li et/ou Na et/ou K respectivement, sous forme métallique.

En particulier, au cours de l'oxydation électrochimique, le métal de transition M peut s'oxyder de l'état +2 à l'état +4 et l'ion Z²⁺ est extrait de la structure, selon la demi-équation d'oxydoréduction suivante :

Z_{z'}MₘSiO₄ → Z_{z}MₘSiO₄ + 2(z'-z) e⁻ + (z'-z) Z²⁺

L'oxydation électrochimique peut être effectuée selon différents modes, par exemple à courant constant, à tension constante, à courant croissant imposé, à tension croissante imposée. La température de l'électrolyte peut être comprise entre 20°C et 60°C. L'oxydation électrochimique est effectuée selon un régime C/x, avec x compris entre 5 et 100, par exemple égal à 20. Un régime C/x correspond à une charge effectuée en x heures. Par exemple un régime C/20 correspond à une charge en 20 heures.

Après réalisation de la réaction d'oxydation électrochimique, le produit de formule (II) obtenu peut être lavé puis séché.

Selon un deuxième mode de réalisation alternatif, le matériau de formule (II) est préalablement à sa réduction en étape **ii),** généré par oxydation chimique du matériau de formule (III). Par oxydation chimique, on considère ici une réaction ne nécessitant aucune activation électronique contrairement à une oxydation électrochimique.

De préférence, l'oxydation chimique met en oeuvre au moins un composé oxydant dont le potentiel d'oxydoréduction est supérieur au potentiel d'oxydoréduction du couple M²⁺/M³⁺ et/ou du couple M³⁺/M⁴⁺ de l'élément M constitutif du matériau de formule (III).

Le composé oxydant peut notamment être choisi parmi le tétrafluoroborate de nitronium (NO₂BF₄), le persulfate de potassium (K₂S₂O₈), l'hexafluorophosphate de nitrosonium (NO₂PF₆), le tétrafluoroborate de nitrosonium (NOBF₄), le péroxyde d'hydrogène (H₂O₂) et leurs mélanges.

De préférence l'oxydation chimique est réalisée au sein d'un bain liquide contenant au moins ledit matériau de formule (III) et ledit composé oxydant et dans des conditions propices à l'extraction de l'élément Z dudit matériau de formule (III) pour former ledit matériau de formule (II) attendu.

Par exemple, le bain peut comporter de l'acétonitrile et la réaction d'oxydation chimique peut être effectuée à une température de 60°C sous reflux pendant une durée égale à 48 heures.

A titre illustratif, l'oxydation chimique du matériau de formule (III) avec le tétrafluoroborate de nitronium (NO₂BF₄), qui présente un potentiel de 5,1V contre le couple Li⁺/Li s'effectue selon la réaction suivante :

Z_{z'}MₘSiO₄ + 2(z'-z) NO₂BF₄ → Z_{z}MₘSiO₄ + 2(z'-z) NO₂ (g) + (z'-z) Z(BF₄)₂.

Après réalisation de l'oxydation chimique, le matériau de formule (II) obtenu peut être lavé puis séché.

Comme cela a été décrit ci-dessus, le matériau de formule (II) du deuxième procédé peut alors constituer le deuxième matériau du premier procédé.

En variante, selon le deuxième procédé, qu'il soit obtenu par échange chimique ou par échange électrochimique, le matériau de formule (II) peut être réduit électrochimiquement en présence d'une électrode source en élément A dans des conditions propices à la formation d'un matériau de formule (I).

En particulier pour réaliser la réduction électrochimique en étape **ii),** le matériau de formule (II) peut former tout ou partie d'une électrode.

L'électrode peut se présenter sous la forme de particules du matériau de formule (II), de préférence d'une taille inférieure à 100 nm, de préférence de taille inférieure à 50 nm, et de préférence recouvertes, de préférence intégralement par une couche de carbone, d'une épaisseur de préférence inférieure à 10 nm. Les particules peuvent notamment être liées entre elles par une matrice carbonée, pour améliorer la conduction électrique au sein de l'électrode et un par un liant polymère pour assurer la cohésion et la tenue mécanique de l'électrode.

De préférence, la réduction électrochimique met aussi en oeuvre une contre-électrode en un matériau comportant l'élément A. De préférence, pour fabriquer un matériau de formule (I) avec A étant Li et/ou Na et/ou K, la contre électrode est en un matériau en Li et/ou Na et/ou K, respectivement, sous forme métallique.

De préférence, la réduction électrochimique est réalisée au moyen d'un milieu électrolytique comprenant une source en élément A.

En particulier, le milieu électrolytique mis en oeuvre pour l'étape de réduction électrochimique en étape **ii)** peut être identique au milieu électrolytique mis en oeuvre pour l'étape d'oxydation électrochimique en étape **i).**

Par exemple, l'élément A est le lithium et le milieu électrolytique comprend une source du lithium, en particulier sous la forme d'un composé choisi parmi l'hexafluorophosphate de lithium (LiPF₆), le perchlorate de lithium (LiClO₄), l'arsenate de lithium (LiAsO₄), le tétrafluoroboate de lithium (LiBF₄), le bis-trifluoromethanesulfonimide de lithium (LiTFSI), le bis(oxalato)borate de lithium (LiBOB), le bis(fluorosulfonyl)imide de lithium (LiFSI), l'hexafluoroarsenate de lithium (LiAsF₆), le triflate de lithium (LiSO₃CF₃), le trifluoroacetate de lithium (LiCF₃CO₂), l'hexafluoroantimonate de lithium (LiSbF₆), LiN(CF₃SO₂)₃, LiN(C₂F₅SO₂), et leurs mélanges.

Par ailleurs, l'électrolyte peut comporter un carbonate, choisi par exemple parmi l'éthyl- carbonate, le diéthyl- carbonate, l'éthyl- méthyl- carbonate, le diméthyl- carbonate, le carbonate de propylène et leurs mélanges. De préférence, la source en élément A, par exemple en lithium, est dissoute dans le carbonate.

De préférence, lorsque le matériau de formule (II) est préparé par oxydation électrochimique, l'électrode et la contre-électrode à la fin de l'étape de réaction d'oxydation électrochimique peuvent constituer l'électrode et la contre-électrode respectivement au début de l'étape de réduction électrochimique. La température de l'électrolyte peut être comprise entre 20°C et 60°C. L'oxydation électrochimique est effectuée selon un régime C/x, avec x compris entre 5 et 100, par exemple égal à 20.

L'étape de réduction électrochimique peut être mise en oeuvre à courant constant, tension constante, courant décroissant imposé, tension décroissante imposée. Elle n'est toutefois pas limitée à ce mode de mise en oeuvre.

### EXEMPLES

### Exemple 1

Une encre est préparée en mélangeant, en pourcentage en masse, 10% de carbone super P-C65, 10% de difluorure de polyvinylidène (PVDF) et 80% d'une poudre de particules de MgMnSiO₄ d'une taille moyenne de 50 nm et recouvertes d'une couche de carbone.

L'encre est enduite sur un feuillard d'aluminium puis est séchée sous vide à 60°C pendant 24 heures. Une électrode est ensuite découpée dans le feuillard d'aluminium recouvert de l'encre ayant séchée. L'électrode est ensuite pressée, puis est séchée sous vide à 80°C pendant 48 heures.

Une cellule d'électrolyse se présentant sous la forme d'une pile bouton au format CR2032 est fabriquée et comporte l'électrode incluant le matériau MgMnSiO₄ et une contre-électrode de lithium (Li) métallique. Un séparateur, constitué d'une membrane de marque Viledon de référence FS 2207-2- DA WA et d'une membrane Celgard 2400, est disposé entre l'électrode et la contre-électrode. Les électrodes, contre électrode et séparateur sont immergés dans un électrolyte liquide constitué d'un solvant formé de trois parts égales de éthyl-carbonate, diéthyl- carbonate et éthyl- méthyl- carbonate, dans lequel est dissous de l'hexafluorophosphate de lithium (LiPF₆) à une concentration de 1 mol/l.

Une première phase d'oxydation électrochimique est réalisée de manière à extraire partiellement l'élément Mg de l'électrode positive MgMnSiO₄.

Une phase de réduction électrochimique est ensuite effectuée, permettant d'insérer des ions lithium en lieu et place des ions Mg extraits lors de la première phase d'oxydoréduction, de manière à former un matériau de formule LiₐMg_{z}MnSiO₄ (avec a<1 et z<1).

La cellule d'électrolyse est alors soumise à des cycles formés d'une charge galvanostatique suivie d'une décharge galvanostatique, imposés à un régime de C/20-D20 entre un potentiel de 1,5V et 4,8V vs. Li+/Li à 25°C.

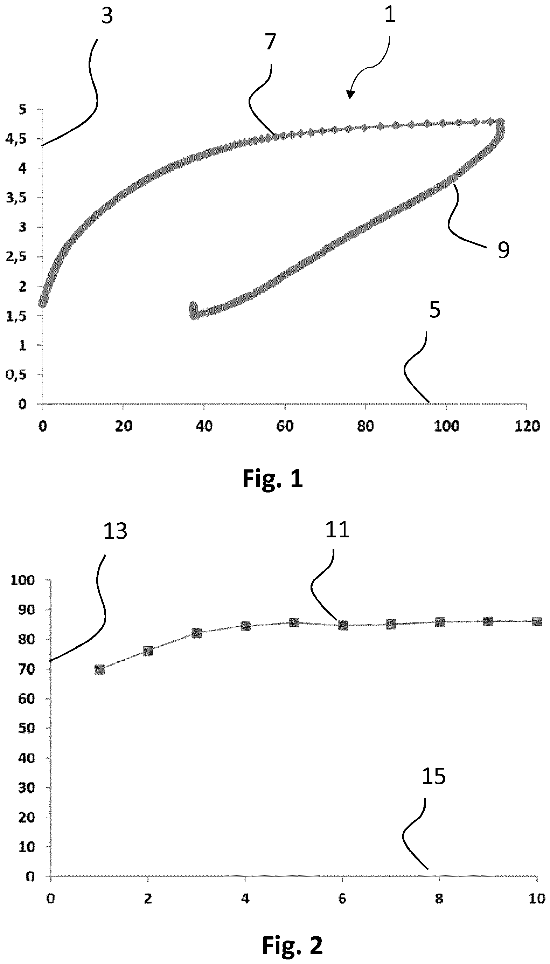

La figure 1 représente l'évolution 1 au cours d'un cycle de charge-décharge du potentiel 3 de l'électrode positive LiₐMg_{z}MnSiO₄ (z<1 et a<1) en fonction de la capacité spécifique nette de matériau actif 5. Au cours de la charge 7, des ions Li⁺ sont désinsérés de l'électrode positive LiₐMg_{z}MnSiO₄ et sont déposés sur l'électrode négative, de sorte qu'un matériau de formule Li_{a'}Mg_{z}MnSiO₄ (avec a'<a) soit formé. Au cours de la décharge 9, les réactions d'oxydoréduction inverses se produisent.

La figure 2 représente l'évolution 11 de la capacité spécifique de l'électrode positive 13 en décharge en fonction du nombre de cycles 15.

Comme cela est observé, une capacité spécifique réversible de 85 mAh/g est obtenue pour le composite formé par le silicate lithié et le carbone sous forme de couche, ce qui correspond à une capacité réversible de 97 mAh/g pour le seul silicate lithié, et aucune dégradation de la capacité n'est observée au fur et à mesure des cycles.

Par ailleurs, aussi bien au cours de la charge que de la décharge, le matériau électrochimiquement actif de l'électrode positive conserve sa structure cristallographique olivine, comme cela peut être constaté par diffraction des rayons X.

### Exemple 2

### Etape 1

Un composé de formule MgMnSiO₄/C est synthétisé par voie sol-gel. Dans un premier bêcher, 4,26 g d'acétate de magnésium tétra- hydraté pour plus de 95% de sa masse, et 4,71 g d'acétate de manganèse tri- et tétra- hydraté sont dissouts, sous agitation, dans une solution aqueuse acide formée de 1 ml d'acide acétique dilué dans 13,55 ml d'eau déionisée. Dans un second bécher sont dissouts 15,00g de P123 (copolymère tri-blocs PEO-PPO-PEO) et 4,47 ml de tétraéthoxysilane (TEOS) sous agitation. La solution contenue dans le premier bécher est ajoutée dans le second bêcher. Le mélange est agité au moyen d'un agitateur magnétique pendant une nuit. La gélification se produit après 4 jours. Le gel obtenu est ensuite séché sous air à une température de 80°C pendant une semaine. Le xérogel ainsi obtenu est broyé puis pyrolysé en demi-tube dans un four tubulaire sous argon pendant une durée de 24 h à une température de 900°C.

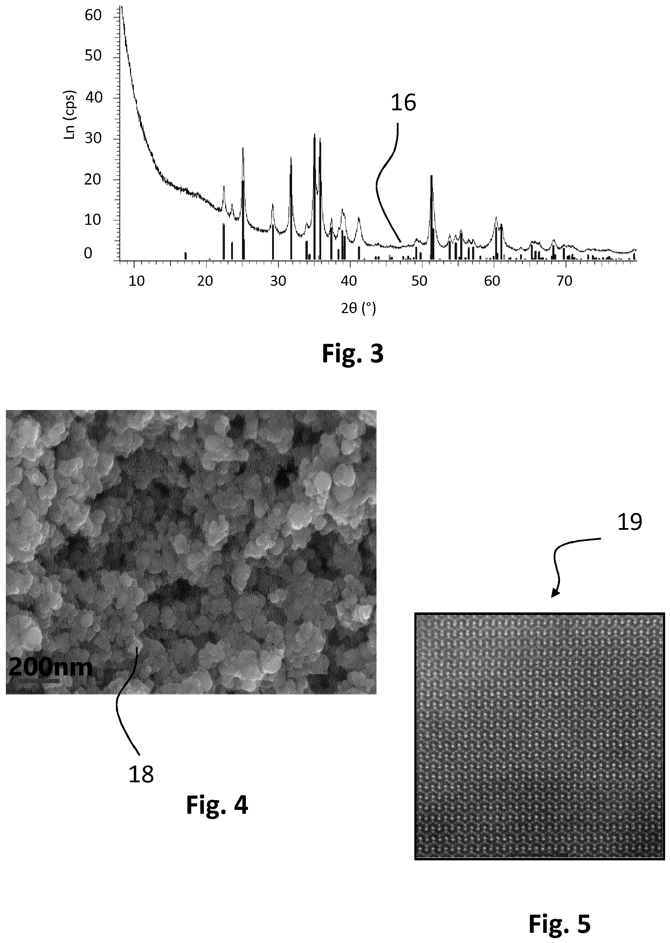

Le diffractogramme 16 de rayons X illustré sur la figure 3 indique que le composé de formule MgMnSiO₄ obtenu au paragraphe précédent cristallise dans le système orthorhombique de groupe d'espace *Pnma.* Comme observé sur la figure 4, le composé se présente sous forme de particules primaires 18 présentant une taille d'environ 50 nm, et comme le confirme le cliché de diffraction 19 présenté sur la figure 5, une structure cristallisée dont le groupe d'espace est en accord avec celui déterminé au moyen du diffractogramme de la figure 3.

### Etape 2

Par la suite, 0,488 g du composé de formule MgMnSiO₄/C obtenu à l'étape 1 sont broyés avec 0,882 g de chlorure de lithium (LiCl) et 1,044 g de chlorure de potassium (KCl), correspondant à une composition eutectique du diagramme binaire LiCl-KCl, de sorte à former un mélange.

Le mélange est pyrolysé dans un four tubulaire sous une atmosphère d'argon pendant une durée de 40 h à une température de 400°C. Au cours du traitement de pyrolyse, la composition eutectique de LiCl-KCl fond et forme un bain de sels fondus, dans lequel s'opère un réarrangement des éléments Mg et Mn au sein de la structure cristallographique de MgMnSiO₄/C vers un état plus ordonné.

La poudre de MgMnSiO₄/C résultant du traitement de pyrolyse est transférée dans une boîte à gants tout en évitant le contact avec l'air ambiant. Elle est lavée à l'éthylène glycol anhydre et séchée sous vide à une température de 150°C pendant 24h.

### Etape 3

0,374 g de la poudre de MgMnSiO₄/C obtenue en fin d'étape 2 est dispersée au moyen de 50 ml d'acétonitrile anhydre dans un ballon en boîte à gants. Dans une autre boîte à gants, 1,233 g de tétrafluoroborate de nitronium sont dissous dans 50 ml d'acétonitrile anhydre et introduits dans une ampoule de coulée. L'ampoule de coulée est ensuite connectée au ballon de manière que l'ensemble formé par l'ampoule de coulée et le ballon et les moyens de connexion les reliant soit étanche et rempli d'argon. L'ensemble est connecté à un montage à reflux et est maintenu sous atmosphère d'argon. La solution de tétrafluoroborate de nitronium est versée goutte après goutte dans la poudre dispersée contenue dans le ballon. Le ballon est agité et maintenu en température à 60°C pendant une durée de 32 h. La poudre ainsi traitée est ensuite lavée à l'acétonitrile, puis filtrée et séchée à une température de 80°C sous vide.

Au cours de l'étape 3, la poudre de MgMnSiO₄/C est oxydée et des atomes de magnésium sont extraits des sites qu'ils occupent dans la structure olivine. On obtient ainsi une poudre de particules de Mg_{z}MnSiO₄/C, avec z < 1.

### Etape 4

Une encre est ensuite préparée, comportant en pourcentages massiques sur la base de la masse de l'encre, 80% de la poudre de Mg_{z}MnSiO₄/C obtenue en fin d'étape 3, 10% de carbone super P-C65 et 10% de diflurorure de polyvinylidène (PVDF). Après enduction sur un feuillard d'aluminium puis séchage sous vide à une température de 60°C pendant une durée de 24 h, des électrodes sont découpées puis calandrées en boîte à gants et enfin séchées pendant une durée de 48 h sous vide, à une température de 80°C.

Une lithiation d'une des électrodes découpées est réalisée en pile bouton (format CR2032). L'électrode définit une électrode positive et une contre-électrode de lithium métallique est utilisée. Un séparateur de la pile est formé d'une couche de Videlon et d'une couche de Celgard 2400. L'électrolyte est constitué d'un mélange d'une part en volume d'éthyl-carbonate (EC), d'une part en volume de diméthyl-carbonate (DMC) et d'une part en volume d'éthyl-méthyl-carbonate (EMC), dans lequel est dissous de l'hexafluorophosphate de lithium (LiPF₆) dans une concentration de 1 mol/l. Une première décharge est effectuée à un régime de C/10 (1C=174 mA/g) de sorte à introduire des ions lithium dans le matériau Mg_{z}MnSiO₄ de l'électrode positive. Ensuite, une succession de cycles de charge/décharge galvanostatiques sont imposés à un régime de C/5 entre 1,5 V et 4,8 V vs Li⁺/Li, à température ambiante.

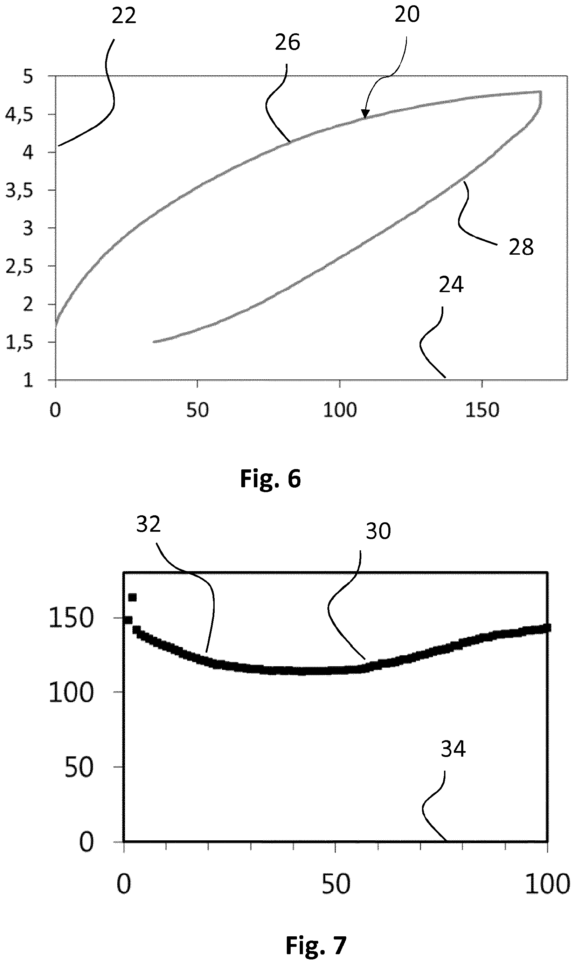

La figure 6 représente l'évolution 20 au cours d'un cycle de charge-décharge du potentiel 22 de l'électrode positive LiₐMg_{z}MnSiO₄ (a<1) en fonction de la capacité spécifique nette de matériau actif 24. Au cours de la charge 26, des ions Li⁺ sont désinsérés de l'électrode positive LiₐMg_{z}MnSiO₄ et sont déposés sur l'électrode négative, de sorte qu'un matériau de formule Li_{a'}Mg_{z}MnSiO₄ (avec a'<a) soit formé. Au cours de la décharge 28, les réactions d'oxydoréduction inverses se produisent.

La figure 7 représente l'évolution 30 de la capacité spécifique de l'électrode positive 32 en décharge en fonction du nombre de cycles 34.

Comme cela est observé, une capacité spécifique réversible supérieure à 110 mAh/g est obtenue pour le composite formé par le silicate lithié.

Par ailleurs, aussi bien au cours de la charge que de la décharge, le matériau électrochimiquement actif de l'électrode positive conserve sa structure cristallographique olivine, comme cela peut être constaté par diffraction des rayons X.

Enfin, le matériau selon l'invention présente une excellente stabilité thermique, et il est formé d'éléments moins coûteux et moins nocifs pour l'environnement que les matériaux de l'art antérieur.

Bien entendu, l'invention n'est pas limitée aux modes de réalisation du produit et aux modes de mise en oeuvre du procédé présentés dans la présente description.

Par ailleurs, sauf indication contraire, une inégalité du type « A supérieur à B », respectivement « A inférieur à B » est considérée strictement. Autrement dit, l'égalité entre A et B est exclue. Par ailleurs, les expressions « comportant un » et « comportant au moins un » sont équivalentes.

## Revendications

1. Produit constitué en tout ou partie par un matériau de structure cristallographique olivine et de formule (I):
AₐZ_{z}MₘSiO₄
dans laquelle :
- A est choisi parmi le lithium (Li), le sodium (Na), le potassium (K) et leurs mélanges,
- Z est choisi parmi le béryllium (Be), le magnésium (Mg), le calcium (Ca), le strontium (Sr), le baryum (Ba) et leurs mélanges,
- M est choisi parmi le fer (Fe), le nickel (Ni), le cobalt (Co), le manganèse (Mn), le chrome (Cr) et leurs mélanges,
- a, z et m sont les coefficients stoechiométriques respectivement de A, Z et M, et remplissent les conditions suivantes :
∘ z > 0, m > 0, a > 0,
∘ a + z + m ≤ 2, et
∘ 2 ≤ (4 - a - 2z) /m < 4.

2. Produit selon la revendication précédente, dans lequel a + z + m = 2

3. Produit selon l'une quelconque des revendications 1 ou 2, dans lequel z = 1 - a et/ou m=1.

4. Produit selon l'une quelconque des revendications 1 à 3, dans lequel z < 1, de préférence z < 0,5, de préférence z < 0,1, voire de préférence z < 0,05, mieux z < 0,01.

5. Produit selon l'une quelconque des revendications précédentes, dans lequel A comporte, en pourcentage molaire exprimé sur le nombre total de moles de métal alcalin constituant A, plus de 90 % de lithium et/ou de potassium et/ou de sodium.

6. Produit selon la revendication précédente, dans lequel A est constitué à plus de 99 % de lithium, en pourcentage molaire exprimé sur le nombre total de moles de métal alcalin constituant A, de préférence A est le lithium.

7. Produit selon l'une des revendications précédentes, dans lequel Z est choisi parmi le magnésium, le calcium et leurs mélanges, de préférence Z est le magnésium.

8. Produit selon l'une quelconque des revendications précédentes, dans lequel m est compris entre 0,9 et 1,1, de préférence égal à 1.

9. Produit selon l'une quelconque des revendications précédentes, dans lequel le matériau de formule (I) se présente sous la forme de particules primaires dont la taille est inférieure à 100 nm, de préférence les particules primaires étant agrégées ou agglomérées entre elles.

10. Produit selon la revendication 9, dans lequel les particules primaires sont recouvertes, de préférence intégralement, par une couche de carbone dont l'épaisseur est inférieure à 10 nm.

11. Procédé de fabrication comprenant au moins les étapes successives consistant à :
a) disposer d'un premier matériau comportant au moins un métal alcalin A choisi parmi le lithium (Li), le sodium (Na), le potassium (K) et leurs mélanges, et d'un deuxième matériau de structure cristallographique olivine de formule (III) :
Z_{z'}MₘSiO₄,
dans laquelle :
- Z est choisi parmi le béryllium (Be), le magnésium (Mg), le calcium (Ca), le strontium (Sr), le baryum (Ba), et leurs mélanges,
- M est choisi parmi le fer (Fe), le nickel (Ni), le cobalt (Co), le manganèse (Mn), le chrome (Cr) et leurs mélanges,
- z' > z, z étant tel que défini précédemment,
- m est tel que défini en revendications 1 à 4,
b) maintenir un bain liquide comportant, de préférence constitué par, le premier matériau en fusion et le deuxième matériau à l'état solide, à une température de maintien et pendant une durée de maintien en température propices à l'insertion d'un métal alcalin A choisi parmi le lithium (Li), le sodium (Na), le potassium (K) et leurs mélanges et fourni par le premier matériau, dans des sites libres de la structure cristallographique olivine du deuxième matériau de sorte à former un produit selon l'une quelconque des revendications précédentes,
c) optionnellement, refroidissement du bain liquide, et
d) optionnellement, lavage puis séchage.

12. Procédé selon la revendication précédente, dans lequel le bain liquide est obtenu par fusion partielle d'une charge de départ constituée de particules formées du premier matériau et de particules formées du deuxième matériau, et de préférence intimement mélangées, la fusion partielle étant de préférence opérée à une température supérieure à la température de fusion du premier matériau et inférieure à la température de dégradation du deuxième matériau.

13. Procédé selon l'une quelconque des revendications 11 et 12, dans lequel, à l'étape b), la température de maintien est supérieure à la température de fusion du premier matériau et inférieure à la température de dégradation du deuxième matériau, et est par exemple comprise entre 200 °C et 500 °C.

14. Procédé selon l'une quelconque des revendications 11 à 13, dans lequel le premier matériau est un mélange de LiNO₃ et LiCl ou un mélange de LiCl et KCl.

15. Dispositif choisi parmi une cathode de batterie, notamment choisie parmi une cathode de batterie lithium-ion (Li-ion), une cathode de batterie sodium-ion (Na-ion), une cathode de batterie potassium-ion (K-ion), une cathode de batterie lithium (Li), une cathode de batterie sodium (Na) et une cathode de batterie potassium (K), ladite cathode de batterie comportant un produit selon l'une quelconque des revendications 1 à 10 ou obtenu par le procédé selon l'une quelconque des revendications 11 à 14.

## Patentansprüche

1. Produkt, das ganz oder teilweise aus einem Material mit kristallographischer Olivinstruktur der Formel (I):
AₐZ_{z}MₘSiO₄
besteht, wobei:
- A aus Lithium (Li), Natrium (Na), Kalium (K) und Mischungen davon ausgewählt ist,
- Z aus Beryllium (Be), Magnesium (Mg), Calcium (Ca), Strontium (Sr), Barium (Ba) und Mischungen davon ausgewählt ist,
- M aus Eisen (Fe), Nickel (Ni), Cobalt (Co), Mangan (Mn), Chrom (Cr) und Mischungen davon ausgewählt ist,
- a, z und m die stöchiometrischen Koeffizienten von A, Z bzw. M sind, die die folgenden Bedingungen erfüllen:
∘ z > 0, m > 0, a > 0,
∘ a + z + m ≤ 2 und
∘ 2 ≤ (4 - a - 2z) /m < 4.

2. Produkt nach Anspruch 1, wobei a + z + m = 2.

3. Produkt nach Anspruch 1 oder 2, wobei z = 1 - a und/oder m = 1.

4. Produkt nach einem der Ansprüche 1 bis 3, wobei z < 1, vorzugsweise z < 0,5, vorzugsweise z < 0,1, vorzugsweise sogar z < 0,05, besser z < 0,01.

5. Produkt nach einem der vorhergehenden Ansprüche, wobei A, in Molprozent, bezogen auf die Gesamtzahl von Molen des Alkalimetall-Bestandteils A, mehr als 90 % Lithium und/oder Kalium und/oder Natrium umfasst.

6. Produkt nach dem vorhergehenden Anspruch, wobei A aus mehr als 99 % Lithium, in Molprozent, bezogen auf die Gesamtzahl von Molen des Alkalimetall-Bestandteils A, besteht, vorzugweise A Lithium ist.

7. Produkt nach einem der vorhergehenden Ansprüche, wobei Z aus Magnesium, Calcium und Mischungen davon ausgewählt ist, vorzugsweise Z Magnesium ist.

8. Produkt nach einem der vorhergehenden Ansprüche, wobei m zwischen 0,9 und 1,1 liegt und vorzugsweise gleich 1 ist.

9. Produkt nach einem der vorhergehenden Ansprüche, wobei das Material der Formel (I) in Form von Primärteilchen mit einer Größe von weniger als 100 nm vorliegt, wobei die Primärteilchen vorzugsweise miteinander aggregiert oder agglomeriert sind.

10. Produkt nach Anspruch 9, wobei die Primärteilchen, vorzugsweise vollständig, mit einer Kohlenstoffschicht mit einer Dicke von weniger als 10 nm bedeckt sind.

11. Herstellungsverfahren, das mindestens die folgenden Schritte umfasst, die aus Folgendem bestehen:
a) Bereitstellen eines ersten Materials, das mindestens ein Alkalimetall A, das aus Lithium (Li), Natrium (Na), Kalium (K) und Mischungen davon ausgewählt ist, und eines zweiten Materials mit kristallographischer Olivinstruktur der Formel (III):
Z_{z'}MₘSiO₄,
wobei:
- Z aus Beryllium (Be), Magnesium (Mg), Calcium (Ca), Strontium (Sr), Barium (Ba) und Mischungen davon ausgewählt ist,
- M aus Eisen (Fe), Nickel (Ni), Cobalt (Co), Mangan (Mn), Chrom (Cr) und Mischungen davon ausgewählt ist,
- z'> z, wobei z wie oben definiert ist,
- m wie in den Ansprüchen 1 bis 4 definiert ist,
b) Halten eines flüssigen Bads, das das erste Material geschmolzen und das zweite Material in festem Zustand umfasst, vorzugsweise daraus besteht, bei einer Haltetemperatur und über eine Temperaturhaltezeit, die für die Insertion eines Alkalimetalls A, das aus Lithium (Li), Natrium (Na), Kalium (K) und Mischungen davon ausgewählt ist und von dem ersten Material bereitgestellt wird, in die freien Stellen der kristallographischen Olivinstruktur des zweiten Materials günstig sind, so dass ein Produkt nach einem der vorhergehenden Ansprüche entsteht,
c) gegebenenfalls Abkühlen des flüssigen Bads und
d) gegebenenfalls Waschen und Trocknen.

12. Verfahren nach dem vorhergehenden Anspruch, bei dem das flüssige Bad durch teilweises Schmelzen einer Ausgangscharge, die aus Teilchen aus dem ersten Material und Teilchen aus dem zweiten Material, die vorzugsweise innig gemischt sind, besteht, erhalten wird, wobei das teilweise Schmelzen vorzugsweise bei einer Temperatur über dem Schmelzpunkt des ersten Materials und unter der Abbautemperatur des zweiten Materials durchgeführt wird.

13. Verfahren nach einem der Ansprüche 11 und 12, bei dem in Schritt b) die Haltetemperatur über dem Schmelzpunkt des ersten Materials und unter der Abbautemperatur des zweiten Materials liegt und beispielsweise zwischen 200 °C und 500 °C liegt.

14. Verfahren nach einem der Ansprüche 11 bis 13, bei dem es sich bei dem ersten Material um eine Mischung von LiNO₃ und LiCl oder eine Mischung von LiCl und KCl handelt.

15. Vorrichtung, ausgewählt aus einer Batteriekathode, insbesondere ausgewählt aus einer Kathode einer Lithium-Ionen-Batterie (Li-Ionen-Batterie), einer Kathode einer Natrium-Ionen-Batterie (Na-Ionen-Batterie), einer Kathode einer Kalium-Ionen-Batterie (K-Ionen-Batterie), einer Kathode einer Lithium-Batterie (Li-Batterie), einer Kathode einer Natrium-Batterie (Na-Batterie) und einer Kathode einer Kalium-Batterie (K-Batterie), wobei die Batteriekathode ein Produkt nach einem der Ansprüche 1 bis 10 umfasst oder ein durch das Verfahren nach einem der Ansprüche 11 bis 14 erhaltenes Produkt umfasst.

## Claims

1. Product constituted totally or partly by a material of olivine crystallographic structure of formula (I):
AₐZ_{z}MₘSiO₄
in which:
- A is chosen from lithium (Li), sodium (Na), potassium (K), and mixtures thereof,
- Z is chosen from beryllium (Be), magnesium (Mg), calcium (Ca), strontium (Sr), barium (Ba), and mixtures thereof,
- M is chosen from iron (Fe), nickel (Ni), cobalt (Co), manganese (Mn), chromium (Cr), and mixtures thereof,
- a, z and m are the stoichiometric coefficients, respectively, of A, Z and M, and satisfy the following conditions:
∘ z > 0, m > 0, a > 0,
∘ a + z + m ≤ 2, and
∘ 2 ≤ (4 - a - 2z)/m < 4.

2. Product according to the preceding claim, in which a + z + m = 2.

3. Product according to either of claims 1 and 2, in which z = 1 - a and/or m=1.

4. Product according to any one of claims 1 to 3, in which z < 1, preferably z < 0.5, preferably z < 0.1, or even preferably z < 0.05, better still z < 0.01.

5. Product according to any one of the preceding claims, in which A comprises, as molar percentages expressed relative to the total number of moles of constituent alkali metal A, more than 90% of lithium and/or potassium and/or sodium.

6. Product according to the preceding claim, in which A is constituted to more than 99% of lithium, as a molar percentage expressed relative to the total number of moles of constituent alkali metal A, preferably A is lithium.

7. Product according to one of the preceding claims, in which Z is chosen from magnesium, calcium, and mixtures thereof, preferably Z is magnesium.

8. Product according to any one of the preceding claims, in which m is between 0.9 and 1.1, preferably equal to 1.

9. Product according to any one of the preceding claims, in which the material of formula (I) is in the form of primary particles less than 100 nm in size, preferably the primary particles being aggregated or agglomerated together.

10. Product according to claim 9, in which the primary particles are covered, preferably entirely, with a layer of carbon less than 10 nm thick.

11. Manufacturing method comprising at least the successive steps consisting in:
a) having a first material comprising at least one alkali metal A chosen from lithium (Li), sodium (Na), potassium (K), and mixtures thereof, and a second material of olivine crystallographic structure of formula (III):
Z_{z'}MₘSiO₄,
in which:
- Z is chosen from beryllium (Be), magnesium (Mg), calcium (Ca), strontium (Sr), barium (Ba), and mixtures thereof,
- M is chosen from iron (Fe), nickel (Ni), cobalt (Co), manganese (Mn), chromium (Cr) and mixtures thereof,
- z' > z, z being as defined previously, and
- m is as defined in claims 1 to 4,
b) maintaining a liquid bath comprising, preferably constituted by, the first molten material and the second material in solid form, at a maintenance temperature and for a maintenance time at a temperature that are suitable for the insertion of an alkali metal A chosen from lithium (Li), sodium (Na), potassium (K), and mixtures thereof, and provided by the first material, in free sites of the olivine crystallographic structure of the second material so as to form a product according to any one of the preceding claims,
c) optionally, cooling of the liquid bath, and
d) optionally, washing and then drying.

12. Method according to the preceding claim, in which the liquid bath is obtained by partial melting of a starting feed constituted of particles formed from the first material and of particles formed from the second material, and preferably intimately mixed, the partial melting being preferably performed at a temperature above the melting point of the first material and below the degradation temperature of the second material.

13. Method according to any one of claims 11 and 12, in which, in step b), the maintenance temperature is greater than the melting point of the first material and less than the degradation temperature of the second material, and ranges for example between 200°C and 500°C.

14. Method according to any one of claims 11 to 13, in which the first material is a mixture of LiNO₃ and LiCl or a mixture of LiCl and KCl.

15. Device chosen from a battery cathode, especially chosen from a lithium-ion (Li-ion) battery cathode, a sodium-ion (Na-ion) battery cathode, a potassium-ion (K-ion) battery cathode, a lithium (Li) battery cathode, a sodium (Na) battery cathode and a potassium (K) battery cathode, said battery cathode comprising a product according to any one of claims 1 to 10 or obtained via the method according to any one of Claims 11 to 14.
